# EUROPEAN PATENT APPLICATION

(11) **EP 1 384 675 A1**
(43) Date of publication of application: **28.01.2004**
(21) Application number: 02078297.5
(22) Date of filing: 23.07.2002
(51) Int. Cl.: B65D 30/00, C08L 23/06

(54) **Polyethylene nets**

(71) Applicant: SOLVAY POLYOLEFINS EUROPE - BELGIUM (Société Anonyme), 1050 Bruxelles (BE)
(72) Inventor: Lambert, Yves-Julien, 1325 Chaumont Gistoux (BE)
(74) Representative: Smith, Julian Philip Howard

(57) **Abstract**

A net for packaging comprising high density polyethylene, which contains from 0.5 to 10 % by weight of polyisobutene. This imparts additional tackiness to the net, but does not adversely affect the manufacturing process.

## Description

The present invention relates to nets made of high density polyethylene (HDPE), such as those typically used for packaging. For transporting containers such as wooden crates or boxes, it is well known to wrap the containers in a web of plastic such as high density polyethylene (HDPE), which may be perforated or in the form of a net. In the present specification, the term "net" means any sheet containing regular apertures or perforations, whether or not it has been woven.

In order to prevent slippage of the containers within the package wrapped by the plastic net, it is desirable that the net has some degree of adhesion to the container surfaces with which it is in contact. It is known to incorporate certain additives into the plastic in order to provide the plastic with a degree of "tackiness". However one disadvantage of such additives is that the tackiness they impart makes processing of the plastic during the manufacture of the nets more difficult.

It is well known to incorporate polyisobutene (PiB) into HDPE, for example as an elastomeric plasticiser, or to improve resistance to stress cracking, or even as a pressure-sensitive adhesive. It is known to incorporate PiB into low density polyethylene (LDPE) and linear low density polyethylene (LLDPE) in order to improve the tackiness of the plastic. However these plastics are not suitable for load-bearing applications such as nets.

We have found that if such nets are made of HDPE, the incorporation of polyisobutene (PiB) into the nets can provide the desired adhesion properties of the final product, without adversely affecting the processing properties of the HDPE during manufacture of the nets.

Accordingly in a first aspect the present invention provides a net for packaging which comprises high density polyethylene and from 0.5 to 10 % by weight of polyisobutene.

It is believed that the advantages of the present invention arise because the added PiB provides the adhesive properties by its presence on the surface of the HDPE : and that it takes about 48 hours after incorporation into the HDPE to migrate to the surface, and up to 5 days for the maximum level of tackiness to develop. Therefore since the HDPE is compounded and converted into a net in a much shorter time than 48 hours, it does not have any additional adhesive properties during that manufacturing process.

In a typical manufacturing process, the HDPE is compounded together with the required amount of PiB, and then extruded or blown to form a film. The film is then cut into tapes which are stretched and then woven or knitted into nets. Alternatively, the compounded HDPE/PiB is extruded into monofilaments or multifilaments, which can be woven into thicker filaments and then stretched and knitted into nets. It is particularly advantageous for the knitting or weaving process that the HDPE does not have any additional adhesive properties during this step.

The amount of PiB in the HDPE is preferably between 2 and 6% by weight. When the HDPE is blown into a film prior to cutting, typical amounts of PiB are between 3 and 6wt%. If the HDPE is extruded into a film, amounts of PiB are typically between 2 and 5wt%.

The HDPE film which is to be formed into tapes is typically made by first blending the PiB with the polyethylene in a mixer or compounding extruder and then pelletising. The pellets are then converted into film in the same way as conventional polyethylene. Alternatively, a "Master Batch" of HDPE containing up to 60% by weight PiB is first prepared, and this is compounded with pure HDPE in an amount sufficient to yield the required final concentration of PiB.

The PiB used preferably has a number average molecular weight Mn of between 1000 and 2500. The viscosity at 100°C preferably ranges between 600 and 3000 cSt. Generally, the higher the molecular weight or viscosity of the PiB, the longer the eventual tackiness takes to appear. The choice of PiB may also depend on the processing temperature; lower processing temperatures generally require lower molecular weight PiBs. For example, blown films typically process at 190-230°C, and for those, PiBs such as Indopol® H-100 and H-300 available from BP Chemicals may be used. For extruded (slot-cast) film, which can be processed at over 270°C, the higher molecular weight products Indopol® H-1200 H-1500, H-1900 and H-2100 may be used. Indopol® H-300 and H-1200 are most preferred products.

Following cooling of the film, it is cut into tapes. The cooling rate of the film can have an effect on the eventual tackiness of the HDPE: generally, the higher the cooling rate the greater the degree of tackiness. Cooling rates above 13°C/second, particularly above 15°C/second, are preferred.

Prior to formation into nets, it is preferred that the PiB-containing HDPE is stored at as low a temperature as possible so as to maximise the length of time before the tackiness develops. A preferred storage temperature is below 10°C.

The degree of tackiness is typically evaluated by determining two related parameters : peel cling, which measures the ease of peeling apart two surfaces (the separating forces being exerted at 90° to the surfaces), and lap cling, which measures the ease of pulling apart two surfaces where the separating forces are parallel to the surfaces.

Lap cling is measured by determining the load at "break" when two partially overlapping films of the material of predetermined dimensions are separated by holding one film and placing a weight on the other.

## Claims

1. Net for packaging comprising high density polyethylene, which contains from 0.5 to 10% by weight of polyisobutene.

2. Net according to claim 1, wherein the amount of polyisobutene is from 2 to 6 % by weight.

3. Net according to any preceding claim, wherein the polyisobutene has a number average molecular weight Mₙ of from 1000 to 2500.

4. Net according to any preceding claim, wherein the polyisobutene has a viscosity at 100°C between 600 and 3000 cSt.

5. Process for manufacturing a net for packaging, comprising compounding together high density polyethylene and polyisobutene, and converting the resultant polymer into a net.

6. Process according to claim 5, wherein the cooling of the polymer melt after compounding is at a rate of at least 13°C/second.

7. Use of polyisobutene to increase the adhesiveness of nets made of high density polyethylene.
